# EUROPEAN PATENT SPECIFICATION

(11) **EP 1 569 480 B1**
(45) Date of publication and mention of the grant of the patent: **03.07.2013**
(21) Application number: 05004354.6
(22) Date of filing: 28.02.2005
(51) Int. Cl.: H04W 12/06, H04W 88/02

(54) **Mobile phone with restriction on use thereof and method for restricting use of mobile phone**
Mobiltelefon und Verfahren zur Verwendungseinschränkung des Mobiltelefons
Téléphone mobile et procédé de restriction d'utilisation du téléphone mobile

(30) Priority: 26.02.2004 JP 2004051556
(43) Date of publication of application: 31.08.2005
(73) Proprietor: NEC Corporation, Minato-ku Tokyo 108-8001 (JP)
(72) Inventor: Inoue, Jiro, Kamikawamachi, Kodama-gun, Saitama (JP)
(74) Representative: von Samson-Himmelstjerna, Friedrich

(56) References cited:
- EP-A- 0 896 486
- EP-A- 1 011 285
- EP-A- 1 168 810
- EP-A- 1 315 391
- DE-A1- 10 043 447
- DE-U1- 9 304 488
- US-A- 6 141 436
- US-B1- 6 542 729

## Description

### BACKGROUND OF THE INVENTION

### 1. Field of the Invention

The present invention relates to a mobile phone having a function for authenticating whether or not a person is a right user (owner) of the mobile phone. The mobile phone has a camera function which, in starting the mobile phone, photographs a face image of a current user, and analyzes the feature of the face image. The present invention also concerns a method for restricting the use of the mobile phone.

### 2. Description of the Related Art

Generally, a mobile phone has a dial-lock function serving as a function for restricting the use thereof. The reset or setting of dial-lock of the mobile phone needs the entry of security code.

Inconveniently, the forgetting of security code disables the resetting or setting of dial-lock.

As an technology capable of dispensing with the entry of security code, Japanese Unexamined Patent Application Publication No. 2003-281099, for example, discloses a living-body information image authenticating system and a living-body information authenticating method. In the system, a face image is used as the living-body information and a system such as a home LAN system can be used from a mobile terminal based on the user authentication with the face image stored in a server of the system.

EP 1 168 810 A2 discloses a mobile phone comprising a camera. By means of the camera, biometric elements, such as the face of a user, can be imaged. By comparing the obtained image with respective image data it can be determined whether or not a current user is actually allowed to use the mobile phone.

US 6,542,729 B1 discloses a system and method for minimizing fraudulently usage of a mobile telephone. To determine whether or not the mobile telephone is used by an unauthorized person, the current user's usage of the mobile telephone is compared with authorized user's prior usage of the mobile telephone. In the case the current usage exhibits a statistical variation exceeding a predetermined threshold, the mobile telephone is deactivated.

EP 1 011 285 A1 discloses personal application system and communication method for performing a subscriber authentication process. By means of data input by a user, it is determined whether or not the current user is allowed to use a subscriber terminal unit. Such data includes voiceprint, fingerprint, physiognomy or holograph. Further, it is possible to provide a database including reference data of a plurality users for comparison with data input by a current user.

US 6,141,436 discloses a portable communication device having a fingerprint identification system. The device transmits data representative of the image of the fingerprint to a remote site when the data representative of the fingerprint image does not match data representative of a reference fingerprint.

### SUMMARY OF THE INVENTION

It is an object of the present invention to provide a mobile phone, in which the operability is improved by using the authentication of face as to whether or not a user is a right user (owner) of the mobile phone without entering the security code.

Another object of the present invention is to provide a method for improving the security of the mobile phone by non-authentication of a person other than a right user of the mobile phone who tries to use the mobile phone.

The invention is carried out according to independent claims 1 and 9.

The mobile phone further has a function for restricting and notifying the use thereof based on a determined result of the owner.

That is, the change in using situation of the mobile phone is detected, and the authenticating function of the current user of the mobile phone starts. Preferably, the authenticating function of the mobile phone automatically operates to determine, by comparing an image with pre-registered image information, whether or not the user is a person of the image information. The authenticating function is performed by inputting the face image of the current user from image input means. The image input means is arranged within an image pick-up range when the current user performs the operation. As a result of the authenticating function, when the face image is not authenticated, the use of at least one part of the functions of the mobile phone is restricted.

In accordance with the specific feature of the present invention, the authenticating function of the current user of the mobile phone starts, when it is detected that the using situation of the mobile phone changes, when the input for operation is checked, or when the mobile phone enters a standby mode. The face image of the user is obtained by image input means, and the obtained face image is compared with the pre-registered image information. As a result of the authenticating function, the face image is not authenticated, and then it is checked to see if the registered image for authentication is present or absent. When a remaining registered image exists, comparisons continue until a match is made. As a result of comparison, when no image match exists, the image is not authenticated, and, preferably, the use of the mobile phone is restricted on part of its functions.

When the user of the mobile phone uses it and a condition is satisfied, the user authentication operates. In this case, the user authentication automatically starts and it is determined by authenticating the face of the user of the mobile phone whether or not the user is the owner of the mobile phone. Thus, the communication safety is ensured without any specific operation. Further, the operability of the mobile phone is not deteriorated.

When the mobile phone is used by a person except for the owner of the mobile phone, the above-mentioned user authentication indicates an authenticating error and the use is restricted at this timing. Thus, the invention can avoid a risk of potential illegal use of the mobile phone (the illegal use of the mobile phone is prevented).

Moreover, the invention improves the security without deteriorating the operability of the user even during the use.

### BRIEF DESCRIPTION OF THE DRAWINGS

The invention is described further hereinafter, by way of examples with reference to the accompanying drawings in which:
Fig. 1 is a diagram showing an example of a mobile phone according to the present invention;
Fig. 2 is a block diagram showing an example of the structure of a mobile phone according to the present invention;
Fig. 3A is a table showing the frequency in use of a mobile phone as an example of a comparing condition according to the first example of the present invention, and Fig. 3B is a graph showing the time and the number of using times according to the first example of the present invention;
Fig. 4 is a flowchart for automatically setting the start of a comparing function of the mobile phone according to the first example of the present invention; and
Fig. 5 is a flowchart for exhibiting a user comparing function serving as an automatic comparison according to the first and second examples of the present invention.

### DESCRIPTION OF THE PREFERRED EMBODIMENTS

A mobile phone of the present invention is equipped with a camera and comprises a function for starting a camera function when a specific condition is satisfied, a function of photographing the face of the current user, and a function of authenticating the user of the mobile phone by analyzing the feature (hereinafter, face authentication). The mobile phone further comprises a function for restricting the use of the mobile phone and a function of notifying thereof based on a determined result of the user.

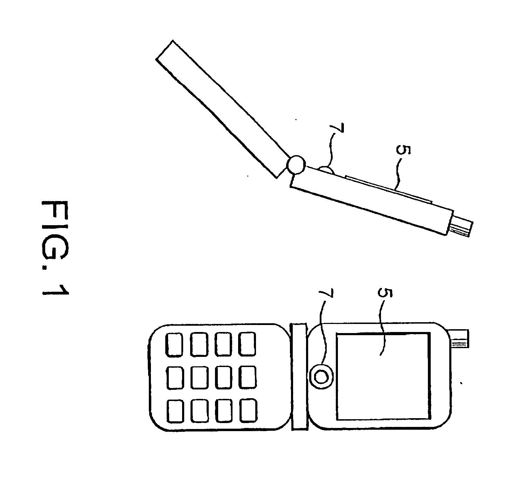

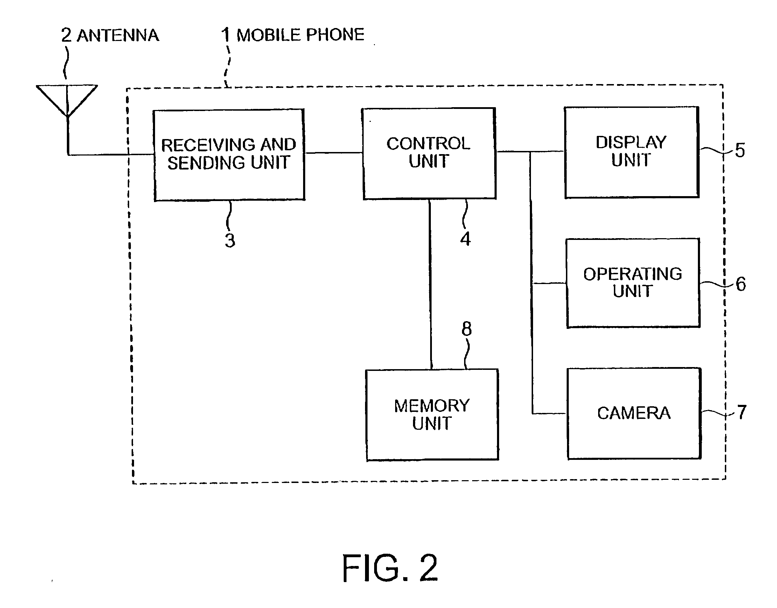

With reference to Figs. 1 and 2, a mobile phone 1 according to the present invention comprises at least an antenna 1, a receiving and sending unit 3, a control unit 4, a display unit 5, an operating unit 6, a camera 7, and a memory unit 8.

The mobile phone 1 has the camera 7 at the bottom of the display unit 5 and, however, the arrangement of the camera 7 is not limited to this. That is, the camera 7 may be arranged on the left of the display unit 5, on the right, or on the top (further, near the center of any of the sides). The camera 7 may be arranged on the operating unit depending on the case. In case that two or more display units 5 are equipped, the camera is arranged at the above-mentioned position on the display unit 5 viewed in the operation or on the operating unit 6. That is, image pick-up means (image input unit) may be arranged within an image pick-up range of, preferably, the user's face image, further preferably, when the user views the display unit 5. Preferably, only a right user, including owner and a person authorized to use, knows that the automatic comparing function is provided for the mobile phone 1. That is, on the appearance, the mobile phone 1 is like a normally-used one.

In case the mobile phone is lent, a borrower is not necessary to be notified of use restriction on the mobile phone. However, it is preferable that an authentication function works with data on the borrower's face inputted in advance. In addition, with respect to e-mail later described in the second example, a function of e-mail transmission is set to be cleared or to be activated after a predetermined period (e.g., lending period).

The user uses functions of the mobile phone 1 by operating the operating unit 6. The operating contents inputted to the operating unit 6 are sent to the control unit 4. The control unit 4 executes the function designated by the input operating contents.

The camera 7 is arranged, preferably, on the same surface of the display unit 5. When the user views the display unit 5, the face of the user is within the image pick-up range of the camera 7.

The image picked-up by the camera 7 is sent to the control unit 4, and is subjected to the face authentication by using user data that is pre-registered in the memory unit 8.

In communications, the control unit 4 activates the receiving and sending unit 3, and establishes a radio transmission via the antenna 2. That is, in accordance with the normal method, after performing the processing for ensuring the line between the mobile phone 1 and a base station and for establishing the radio transmission, communications such as data communications is performed.

### First example

The mobile phone according to the present invention has a function for authenticating the user by using the authentication of the face of the user upon detecting the change in using situation. An original data for face authentication is stored, in advance, in the memory unit 8 of the mobile phone 1.

An example of the operation will be described hereinbelow.

The change in using situation is detected as follows.

First, a use situation table or use frequency table is created. That is, the number of incoming/outgoing calls is counted in every predetermined time, and 24 hours, preferably, the period of the life is set as one period for table. The time counting ends for every unit-time, and a using-frequency table is updated.

Thus, the using situation table includes data associated with the history of the using situation of the mobile phone 1. The change in using situation is determined by referring to the using situation table.

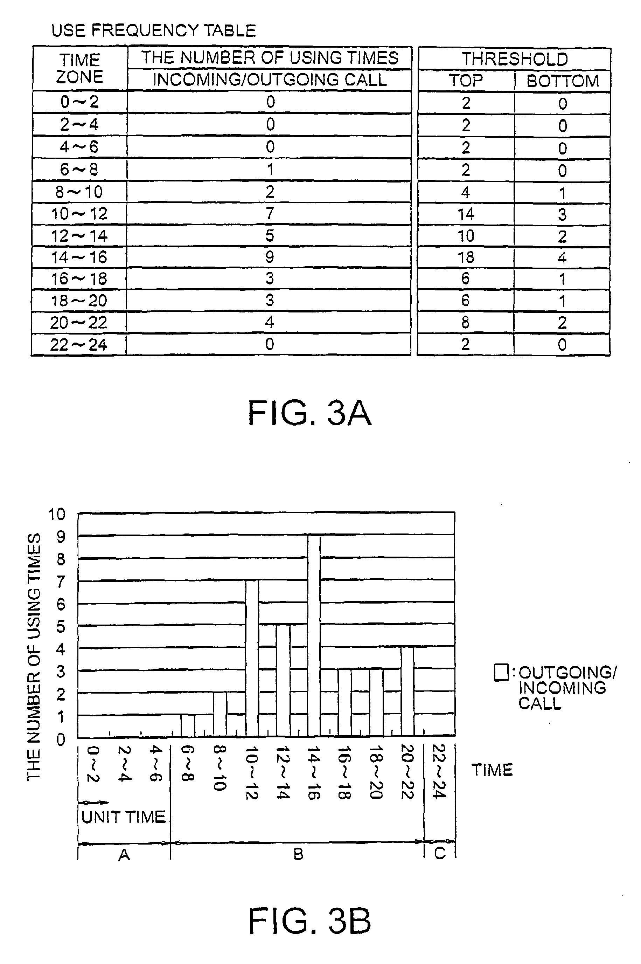

Figs. 3A and 3B show an example of 24 hours serving as one period with a unit time of 2 hours. The number of incoming/outgoing calls is counted every 2 hours and the using situation table is formed.

The top threshold and bottom threshold are determined depending on the using situation of the unit time.

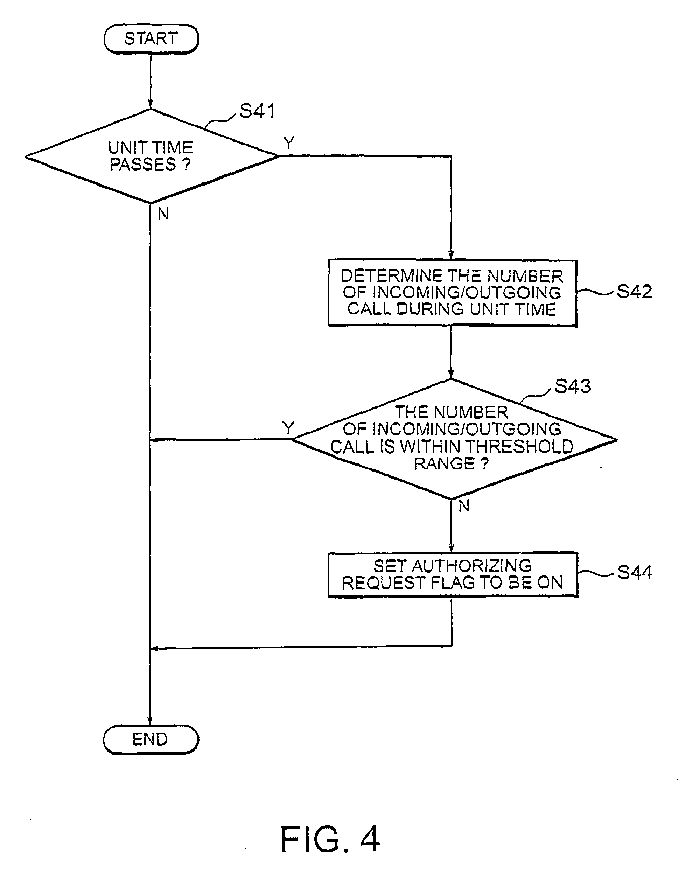

Referring to Fig. 3A, as the top threshold, a value is employed which is greater of two and a value which is twice as large as the number of incoming/outgoing calls in the using frequency table. As the bottom threshold, a half of the number of the incoming/outgoing calls in the using frequency table is employed. The request for authentication is determined with reference to a flowchart shown in Fig. 4.

In Fig. 4, it is determined whether or not the unit time passes (in step S41). When a unit time passes (YES in step S41), the number of incoming/outgoing calls during the unit time is determined (in step S42). The determined number of incoming/outgoing calls is compared with the thresholds in the using frequency table (in step S43). When the number of incoming/outgoing calls is out of the top value and the bottom value in the table, an authenticating request flag is set to be on (in step S44).

Assume that, in time zones A and C shown in Fig. 3B, the mobile phone 1 is used, and the number of function operation is 5 within time zones 0 to 2 belonging to the time zone A. In the time zone B shown in Fig. 3B, also assume that the using frequency sharply changes, and the number of incoming/outgoing calls drops to 0 within time zones 14 to 16.

In a first case, the number of incoming/outgoing calls is significantly different from the trends in the past using situation, indicating the possibility that the mobile phone 1 is used by another person. The mobile phone 1 sets the authenticating request thereof to be on, thereby starting the user authenticating function.

In a second case, when it is detected that there is no use in the mobile phone 1 within the time zone B, it is considered that the mobile phone 1 might be lost and another person might use the mobile phone 1. The authenticating request is set to be on, thereby regulating the use of the mobile phone 1.

The first example illustrates that the authenticating request is set to be on when the using frequency is different from the normal one within one time zone. In place of the time zone, a position where the mobile phone is located may be employed. In this case, it is detected that a location of the originating call is different from the normal areas, and then the authenticating request is set to be on. Briefly, in the mobile phone 1 of the first example, a determination is made of whether any desired value is out of one range, and the authenticating request is set to be on. In the example, the number of thresholds is two, the one value is out of the range of the two thresholds, and the authenticating request is set to be on. However, the number of thresholds may be one.

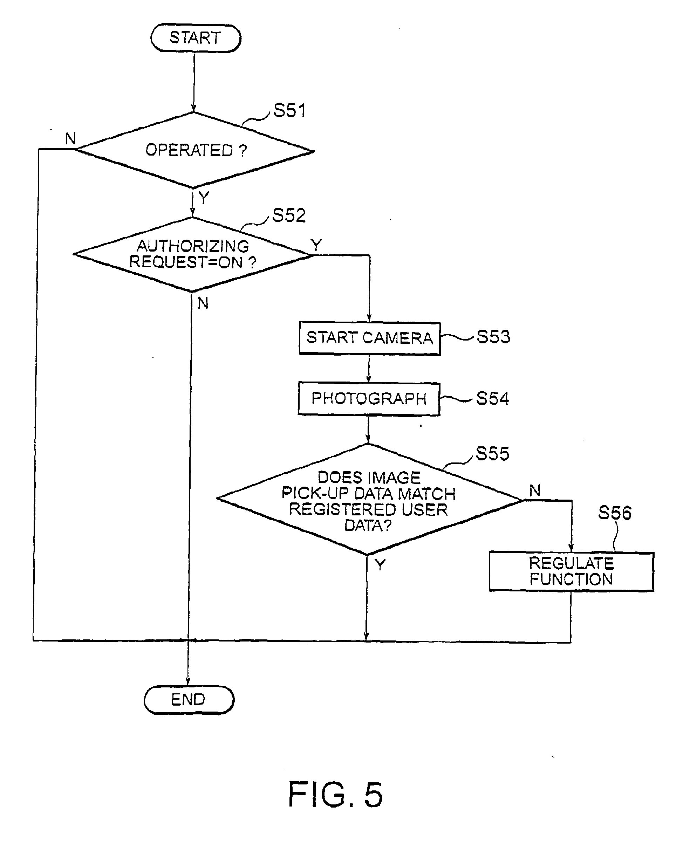

Next, a description is given of an example of the operation upon executing the user authentication with reference to Fig. 5.

Referring to Fig. 5, it is confirmed that the operation, such as the menu operation, telephone number input, email creation, and email access while viewing the display unit 5, is performed on the mobile phone 1 (YES in step S51). The state of the authenticating request flag is checked (in step S52). If the authenticating flag is on, the camera 7 starts (in step S53) and the image is picked-up (in step S54). The camera 7 is arranged to pick-up the image of the user face at the user operating timing. The picked-up image data is compared with the pre-registered user data. It is authorized or authenticated based on the comparison of face images whether or not the current user is the owner of the mobile phone (in step S55).

If it is authenticated that the current user is not the right user (owner) of the mobile phone 1, that is, the face image of the user does not match the registered ones, the use function of the mobile phone 1 is restricted (in step S56).

If it is authenticated that the current user is the right user (owner) of the mobile phone 1, the user authorization ends without the regulation of use function.

If the current user is authenticated as being not a right person, the use restriction function starts the processing for regulating the use of the mobile phone 1 by dial-lock or power off. The operation of use restriction function protects the individual information (family information and friend information) and prevents the reference of individual information from another person.

### Second example

The second example is different from that of the first one in that the number of users for face authorization is plural. That is, the mobile phone 1 is individual property in the first example. On the other hand, the mobile phone of the second example is used as common property (including property of the name of two or more persons) and one of a plurality of registered users uses the mobile phone. In this case, a plurality of users is pre-registered, and the mobile phone is usable when the face of one of them is authorized. Further, the mobile phone is so implemented that the sharing persons can regulate functions so as to prevent the use of their own data by another person.

The flow according to the second example is same as that in steps S41 to S44 in Fig. 4 for setting the condition of user authorization according to the first example. However, in step S55 in the face authorization (user authorization) shown in Fig. 5, when the face of the user does not match the registered faces, the processing proceeds to another step S57 (not shown in the chart), before going to step S56. For example, in step S57, it is determined that the other registered data exists (YES in step S57), and then the processing returns to step S55 whereupon the user data is compared with specific registered data. If it is determined that the user data does not match the specific registered data, the processing returns to step S57 whereupon it is checked to see if another data exists. The above-mentioned operation continues until the other data does not exist. If it is determined in step S57 that the other data does not exist (NO in step S57), the processing advances to step S56.

### Third example

The mobile phone 1 according to a third example comprises an additional function for sending the image data for authentication to destinations designated by a person such as owner, if it is authenticated by the face (in the user authorization) that the user is not the registered one.

Specifically, the mobile phone 1 according to the third example has a mechanism for setting the authenticating request to be on and sending image pick-up data when the email reception is made in a specific format or an inbound connection is made to the mobile phone 1. Thus, this mechanism helps owner prevent the ill-use of the mobile phone 1 after losing it, and help owner take legal means. Further, the mechanism helps improve the possibility that the lost mobile phone 1 is collected. When a GPS function is installed, the mobile phone is capable of sending the position data thereof together with information of unauthorized use following the user authentication processing if the mobile phone 1 is illegally used without leave. This also helps collect the lost mobile phone.

Referring to Fig. 5 again, in step S56, the use function of the mobile phone 1 is restricted and then an email with the face image of the unauthorized user which is inputted in the comparison is sent to parties concerned with a proper owner. Preferably, the proper owner pre-registers the sending destination in the mobile phone 1 and is notified via email addressed to the sending destination that the mobile phone is in the hands of another person, when the mobile phone 1 is lost. Further, the right owner requests, to the communication carrier, the processing for entirely prohibiting the use of mobile phone so as to prevent the illegal use of a picking-up person of the mobile phone 1. Alternatively, a warning message for prohibiting the illegal use may be sent via the mobile phone 1. As a result of the above-mentioned processing, the illegal action and illegal access on the Internet banking or cash and voucher are prevented.

As recent mobile phone 1 has a function equivalent to the credit, the mobile phone according to the third example is particularly important to prevent the illegal use of the mobile phone 1. Further, the email receiver may store the communication history (of email and transaction information) to prevent the illegal use without fail. For example, the individual information (address, telephone number, and email address) stored in the mobile phone 1 is erased or is completely encrypted and then is sent (stored), and after that the processed email is erased in the mobile phone 1.

### Other examples

The security of individual data is improved by the following operation under a condition for automatically requesting the authorization, other than the condition shown in Fig. 4 according to the first embodiment. That is, (1) any operation is executed (including the pressing operation of an operating key), (2) the user data is used or the key operation is performed to use the user data, and (3) the operating screen of the mobile phone is opened for operation (including a state change into the standby mode of the mobile phone 1 which is switched from the off-state to the on-state).

In place of steps S41 to S43 in Fig. 4, in the case (1), it is determined whether or not any operation is executed, the processing advances to step S44 when it is determined that any operation is executed, and it returns to the start when it is determined that any operation is not executed. In the case (2), similarly to the case (1), it is determined whether or not the data is used or whether or not the key operation for use of data is inputted, and if not so, the processing returns to the start, and if so, the processing advances to step S44. In the case (3), image input means is generally folded without the use of the mobile phone 1 and is in a dark state. In the use of the mobile phone 1, it is detected that light is incident on the image input means (camera) or it is detected that the image input means shifts to the unfolding state from the folding state. In the standby mode of the mobile phone (which is generally detected in the unfolding state by displaying the image on display means), the image comparing function automatically exhibits (starts).

According to the present invention, the comparing function automatically operates under at least one of the above-mentioned conditions. Further, a plurality of the above conditions may be combined and it is appropriately set which condition is first selected.

According to the present invention, the first to third examples and other examples may be properly combined. That is, the condition for automatic checking function is selected from the above-mentioned conditions according to the first to third examples and other examples. Further, the mobile phone according to the present invention has the function for preventing the use of the communication function (including the email transmission) serving as one specific function (such as the individual information) of a person other than one owner or one person having the using right. In addition, the specific function is regulated on the one person having the using right so as to prevent use of another person's information. As a consequence, the leakage of privacy of another person or secret item is prevented. When the other person except for the one person having the using right illegally uses the mobile phone, at least one part of the functions stops or the power is turned off in the mobile phone to prevent the illegal action. In the case of illegal use, the email function is exhibited and the image of the illegal user (preferably, face image) is sent to the email destination that is previously registered. In this case, the history information on the illegal action (including the using time, sending destination, and contents) and positional information for specifying the position are additionally sent.

In the present invention, the user of the mobile phone is automatically checked by user comparison to see if the user of the mobile phone is the owner thereof or one of the authorized users. If a person other than the owners or one of the authorized users uses the mobile phone, the use thereof (functions of the mobile phone) is regulated. It is possible to prevent the leakage of individual information or client information of a company or the like from the mobile phone. Further, it is possible to provide communication means which protects the security and the reliability in the wide range by ensuring the secure transaction for protecting the individual property or common property from the illegal use of communication costs of the owner or of network banking, by ensuring the communication secret, and by preventing the leakage of the individual information and the corporate information (including the know-how). The present invention can be applied to any communication devices.

## Claims

1. A mobile phone device, comprising
means for authenticating a user by comparing image information of a current user and at least one pre-registered image information each of a registered user of the mobile phone device (1);
means for detecting a change in using situation of the mobile phone device (1);
means for activating the user authenticating means in response to a detection of the change;
means for activating a use restriction function depending on user authentication;
a memory unit (8) for storing individual information of a registered user of the mobile phone device (1);
wherein the user restriction function activating means is adapted to restrict the use of the mobile phone device (1) when the authentication means does not authenticate the current user;
**characterized by** sending means for sending the image information of the current to at user least one destination pre-registered in the mobile phone device per e-mail when the authentication means does not authenticate the current user; and
means for erasing the stored individual information; wherein the erasing means is adapted to erase the stored individual information when the authentication means does not authenticate the current user.

2. A mobile phone device according to claim 1, wherein the detecting means is adapted to detect the change in using situation by detecting that the history of the using situation differs from a predetermined range.

3. A mobile phone device according to claim 1 or 2, wherein the detecting means is adapted to detect the change in using situation by detecting a user operation of the mobile phone device.

4. A mobile phone device according to one of the claims 1 to 3, wherein the detecting means is adapted to detect the change in using situation when the mobile phone device enters a standby mode.

5. A mobile phone device according to one of the claims 1 to 4, further comprising
image input means (7),
wherein the user authenticating means is adapted to authenticate the current user based on image information on the face of the current user supplied from the image input means (7).

6. A mobile phone device according to claim 5, wherein the image input means (7) is arranged at a position for capturing the user within an image pick-up range when the user operates the mobile phone device (1).

7. A mobile phone device according to one of the claims 1 to 6, wherein the user authenticating means is adapted to be activated in response to an e-mail reception or an inbound connection to the mobile phone device (1).

8. A mobile phone device according to one of the claims 1 to 7, further comprising
a GPS function providing position data of the mobile phone device (1), wherein
the sending means is adapted to send the position data together with the image information to the at least one destination when the authentication means does not authenticate the current user.

9. A method for restricting the use of a mobile phone device, comprising the steps of
detecting a change in using situation of the mobile phone device;
activating an authenticating function of the mobile phone device;
comparing and checking information on a face image of a current user with at least one pre-registered image information each of registered user of the mobile phone device;
authenticating the current user as a result of comparison;
restricting the use of at least one part of functions of the mobile phone device when the current user is not authenticated as a result of the comparison;
storing individual information of a registered user of the mobile phone device in a memory of the mobile phone device; **characterized by** sending the face image per e-mail to the at least one destination when the current user is not authenticated as a result of comparison;
and
erasing the stored individual information when the current user is not authenticated as a result of comparison.

10. A method according to claim 9, wherein the detecting step comprises a step of detecting the change in using situation when the history of the using situation differs from a predetermined permitted range.

11. A method according to claim 9 or 10, wherein the detecting step comprises a step of detecting the change in using situation in user operation of the mobile phone device.

12. A method according to one of the claims 9 to 11, wherein the detecting step comprises a step of detecting the change in using situation when the mobile phone device enters a standby mode.

13. A method according to one of the claims 9 to 12, wherein the comparing and checking step and the authenticating step continue until each of the at least one pre-registered image information is compared with the face image as long as no match of information appears.

14. A method according to one of the claims 9 to 13, wherein the authenticating function is activated in response to an e-mail reception or an inbound connection to the mobile phone device.

15. A method according to one of the claims 9 to 14, further comprising the steps of
providing position data of the mobile phone device by means of a GPS function; and
sending the position data together with the face image to the at least one destination when the current user is not authenticated as a result of the comparison.

## Patentansprüche

1. Mobiltelefon-Vorrichtung, umfassend
Mittel zum Authentifizieren eines Nutzers durch Vergleichen einer Bildinformation eines aktuellen Nutzers und wenigstens einer vorab registrierten Bildinformation jeweils eines registrierten Nutzers der Mobiltelefon-Vorrichtung (1);
Mittel zum Detektieren einer Änderung in einer Verwendungssituation der Mobiltelefon-Vorrichtung (1);
Mittel zum Aktivieren des Nutzer-Authentifizierungsmittels in Antwort auf eine Erfassung einer Änderung;
Mittel zum Aktivieren einer Verwendungs-Beschränkungs-Funktion in Abhängigkeit einer Nutzer-Authentifizierung;
eine Speichereinheit (8) zum Speichern einer individuellen Information eines registrierten Nutzers der Mobiltelefon-Vorrichtung (1);
wobei das Nutzer-Beschränkungs-Funktions-Aktivierungsmittel ausgelegt ist, die Verwendung der Mobiltelefon-Vorrichtung (1) zu beschränken, wenn das Authentifizierungsmittel den aktuellen Nutzer nicht authentifiziert;
**gekennzeichnet durch**
Sendemittel zum Senden der Bildinformation des aktuellen Nutzers zu wenigstens einem Ziel, das in der Mobiltelefon-Vorrichtung per E-Mail vorab registriert ist, wenn das Authentifizierungsmittel den aktuellen Nutzer nicht authentifiziert; und
Mittel zum Löschen der gespeicherten individuellen Information; wobei das Löschmittel ausgelegt ist, die gespeicherte individuelle Information zu löschen, wenn das Authentifizierungsmittel den aktuellen Nutzer nicht authentifiziert.

2. Mobiltelefon-Vorrichtung nach Anspruch 1, bei welcher das Detektionsmittel ausgelegt ist, die Änderung in der Verwendungssituation, zu detektieren, indem detektiert wird, dass die Vorgeschichte der Verwendungssituation von einem vorab bestimmten Bereich abweicht.

3. Mobiltelefon-Vorrichtung nach einem der Ansprüche 1 oder 2, bei welcher das Detektionsmittel ausgelegt ist, die Änderung der Verwendungssituation durch Detektieren einer Nutzer-Operation der Mobiltelefon-Vorrichtung zu detektieren.

4. Mobiltelefon-Vorrichtung nach einem der Ansprüche 1 bis 3, bei welcher das Detektionsmittel ausgelegt ist, die Änderung einer Verwendungssituation zu erfassen, wenn die Mobiltelefon-Vorrichtung einen Stand-By-Modus annimmt.

5. Mobiltelefon-Vorrichtung nach einem der Ansprüche 1 bis 4, des Weiteren umfassend
Bildeingabe-Mittel (7),
wobei das Nutzer-Authentifizierungsmittel ausgestaltet ist, den aktuellen Nutzer basierend auf einer Bildinformation auf dem Gesicht des aktuellen Nutzers zu authentifizieren, die von dem Bildeingabe-Mittel (7) geliefert wird.

6. Mobiltelefon-Vorrichtung nach Anspruch 5, bei welcher das Bildeingabe-Mittel (7) an einer Stelle angeordnet ist, um den Nutzer in einem Bildaufnahme-Bereich zu erfassen, wenn der Nutzer die Mobiltelefon-Vorrichtung (1) bedient.

7. Mobiltelefon-Vorrichtung nach einem der Ansprüche 1 bis 6, bei welcher das Nutzer-Authentifizierungsmittel ausgelegt ist, in Antwort auf einen E-Mail-Empfang oder einer eingehenden Verbindung zu der Mobiltelefon-Vorrichtung (1) aktiviert zu werden.

8. Mobiltelefon-Vorrichtung nach einem der Ansprüche 1 bis 7, des Weiteren umfassend
eine GPS-Funktion, die Positionsdaten der Mobiltelefon-Vorrichtung (1) bereitstellt, wobei das Sendemittel ausgestaltet ist, die Positions-Daten zusammen mit der Bildinformation zu dem wenigstens einen Ziel zu senden, wenn das Authentifizierungsmittel den aktuellen Nutzer nicht authentifiziert.

9. Verfahren zum Beschränken der Verwendung einer Mobiltelefon-Vorrichtung, die Schritte umfassend
Detektion einer Änderung einer Verwendungssituation der Mobiltelefon-Vorrichtung;
Aktivieren einer Authentifizierungs-Funktion der Mobiltelefon-Vorrichtung;
Vergleichen und Prüfen einer Information auf einem Gesichtsbild eines aktuellen Nutzers mit wenigstens einer vorab registrierten Bildinformation jeweils eines registrierten Nutzers der Mobiltelefon-Vorrichtung;
Authentifizieren des aktuellen Nutzers als Ergebnis des Vergleichs;
Beschränken der Verwendung wenigstens eines Teils von Funktionen der Mobiltelefon-Vorrichtung, wenn der aktuelle Nutzer als Ergebnis des Vergleichs nicht authentifiziert wird;
Speichern einer individuellen Information eines registrierten Nutzers der Mobiltelefon-Vorrichtung in einem Speicher der Mobiltelefon-Vorrichtung;
**gekennzeichnet durch**
Senden des Gesichtsbilds per E-Mail zu dem wenigstens einen Ziel, wenn der aktuelle Nutzer als Ergebnis des Vergleichs nicht authentifiziert wird; und
Löschen der gespeicherten individuellen Information, wenn der aktuelle Nutzer als Ergebnis des Vergleichs nicht authentifiziert wird.

10. Verfahren nach Anspruch 9, bei welchem der Detektionsschritt einen Schritt umfasst, die Änderung einer Verwendungssituation zu detektieren, wenn sich die Vorgeschichte der Verwendungssituation von einem vorbestimmten gestatteten Bereich unterscheidet.

11. Verfahren nach einem der Ansprüche 9 oder 10, bei welchem der Detektionsschritt einen Schritt umfasst, die Änderung einer Verwendungssituation bei einer Nutzer-Operation der Mobiltelefon-Vorrichtung zu detektieren.

12. Verfahren nach einem der Ansprüche 9 bis 11, bei welchem der Detektionsschritt einen Schritt umfasst, die Änderung einer Verwendungssituation zu detektieren, wenn die Mobiltelefon-Vorrichtung einen Stand-By-Modus annimmt.

13. Verfahren nach einem der Ansprüche 9 bis 12, bei welchem der Vergleichs- und der Prüfschritt und der Authentifizierungsschritt fortdauern, bis jede der wenigstens einen vorab registrierten Bildinformation mit dem Gesichtsbild verglichen wird, solange sich keine übereinstimmende Information ergibt.

14. Verfahren nach einem der Ansprüche 9 bis 13, bei welchem die Authentifizierungs-Funktion in Antwort auf einen E-Mail-Empfang oder eine eingehende Verbindung zu der Mobiltelefon-Vorrichtung aktiviert wird.

15. Verfahren nach einem der Ansprüche 9 bis 14, ferner die Schritte umfassend
Bereitstellen von Positions-Daten der Mobiltelefon-Vorrichtung durch eine GPS-Funktion; und
Senden der Positions-Daten zusammen mit dem Gesichtsbild zu dem wenigstens einen Ziel, wenn der aktuelle Nutzer als Ergebnis des Vergleichs nicht authentifiziert wird.

## Revendications

1. Dispositif de téléphone mobile, comprenant
des moyens d'authentification d'un utilisateur par comparaison de l'information d'image d'un utilisateur actuel et d'au moins une information d'image préenregistrée chacune d'un utilisateur enregistré du dispositif de téléphone mobile (1) ;
des moyens de détection d'un changement dans la situation d'utilisation du dispositif de téléphone mobile (1) ;
des moyens d'activation des moyens d'authentification d'utilisateur en réponse à une détection du changement ;
des moyens d'activation d'une fonction de restriction d'utilisation en fonction de l'authentification d'utilisateur ;
une unité de mémoire (8) destinée à stocker une information individuelle d'un utilisateur enregistré du dispositif de téléphone mobile (1) ;
dans lequel les moyens d'activation de fonction de restriction d'utilisateur sont adaptés pour restreindre l'utilisation du dispositif de téléphone mobile (1) lorsque les moyens d'authentification n'authentifient pas l'utilisateur actuel ;
**caractérisé par**
des moyens d'envoi destiné à envoyer l'information d'image de l'utilisateur actuel à au moins une destination préenregistrée dans le dispositif de téléphone mobile par courriel lorsque les moyens d'authentification n'authentifient pas l'utilisateur actuel ; et
des moyens d'effacement de l'information individuelle stockée ; dans lequel les moyens d'effacement sont adaptés pour effacer l'information individuelle stockée lorsque les moyens d'authentification n'authentifient pas l'utilisateur actuel.

2. Dispositif de téléphone mobile selon la revendication 1, dans lequel les moyens de détection sont adaptés pour détecter le changement dans la situation d'utilisation en détectant que l'historique de la situation d'utilisation diffère d'une plage prédéterminée.

3. Dispositif de téléphone mobile selon la revendication 1 ou 2, dans lequel les moyens de détection sont adaptés pour détecter le changement dans la situation d'utilisation en détectant une opération d'utilisateur du dispositif de téléphone mobile.

4. Dispositif de téléphone mobile selon l'une quelconque des revendications 1 à 3, dans lequel les moyens de détection sont adaptés pour détecter le changement dans la situation d'utilisation lorsque le dispositif de téléphone mobile entre en mode veille.

5. Dispositif de téléphone mobile selon l'une quelconque des revendications 1 à 4, comprenant en outre
des moyens d'entrée d'image (7),
dans lequel les moyens d'authentification d'utilisateur sont adaptés pour authentifier l'utilisateur actuel en se basant sur l'information d'image sur le visage de l'utilisateur actuel fourni par les moyens d'entrée d'image (7).

6. Dispositif de téléphone mobile selon la revendication 5, dans lequel les moyens d'entrée d'image (7) sont agencés dans une position destinée à capturer l'utilisateur dans une plage de prises de vue d'image lorsque l'utilisateur utilise le dispositif de téléphone mobile (1).

7. Dispositif de téléphone mobile selon l'une quelconque des revendications 1 à 6, dans lequel les moyens d'authentification d'utilisateur sont adaptés pour être activé en réponse à la réception d'un courriel ou d'une connexion entrante dans le dispositif de téléphone mobile (1).

8. Dispositif de téléphone mobile selon l'une quelconque des revendications 1 à 7, comprenant en outre
une fonction GPS fournissant des données de position du dispositif de téléphone mobile (1), dans lequel
les moyens d'envoi sont adaptés pour envoyer les données de position ainsi que l'information d'image à la au moins une destination lorsque les moyens d'identification n'authentifient pas l'utilisateur actuel.

9. Procédé de restriction de l'utilisation d'un dispositif de téléphone mobile, comprenant les étapes de :
détection d'un changement dans la situation d'utilisation du dispositif de téléphone mobile ;
activation d'une fonction d'authentification du dispositif de téléphone mobile ;
comparaison et vérification d'information sur une image de visage d'un utilisateur actuel avec au moins une information d'image préenregistrée de chacun des utilisateurs enregistrés du dispositif de téléphone mobile ;
authentification de l'utilisateur actuel à la suite de la comparaison ;
restriction de l'utilisation d'au moins une partie des fonctions du dispositif de téléphone mobile lorsque l'utilisateur actuel n'est pas authentifié à la suite de la comparaison ;
stockage d'une information individuelle d'un utilisateur enregistré du dispositif de téléphone mobile dans une mémoire du dispositif de téléphone mobile ;
**caractérisé par**
l'envoi de l'image de visage par courriel à la au moins une destination lorsque l'utilisateur actuel n'est pas authentifié à la suite de la comparaison ; et
effacement des informations individuelles stockées lorsque l'utilisateur actuel n'est pas authentifié à la suite de la comparaison.

10. Procédé selon la revendication 9, dans lequel l'étape de détection comprend une sous-étape consistant à détecter le changement dans la situation d'utilisation lorsque l'historique de la situation d'utilisation diffère d'une plage autorisée prédéterminée.

11. Procédé selon la revendication 9 ou 10, dans lequel l'étape de détection comprend une sous-étape de détection du changement dans la situation d'utilisation dans l'utilisation par l'utilisateur du dispositif de téléphone mobile.

12. Procédé selon l'une des revendications 9 à 11, dans lequel l'étape de détection comprend une sous-étape consistant à détecter le changement dans la situation d'utilisation lorsque le dispositif de téléphone mobile entre en mode veille.

13. Procédé selon l'une des revendications 9 à 12, dans lequel l'étape de comparaison et de vérification et l'étape d'authentification continuent jusqu'à ce que chacune des au moins une information d'image préenregistrée soit comparée à l'image de visage tant qu'aucune correspondance d'information n'apparaît.

14. Procédé selon l'une des revendications 9 à 13, dans lequel la fonction d'authentification est activée en réponse à une réception de courriel ou à une connexion entrante dans le dispositif de téléphone mobile.

15. Procédé selon l'une des revendications 9 à 14, comprenant en outre les étapes de
fourniture de données de position du dispositif de téléphone mobile au moyen d'une fonction de GPS ; et
envoi des données de position ainsi que de l'image de visage à la au moins une destination lorsque l'utilisateur actuel n'est pas authentifié à la suite de la comparaison.
